# EUROPÄISCHE PATENTANMELDUNG

(11) **EP 4 492 616 A1**
(43) Veröffentlichungstag der Anmeldung: **15.01.2025**
(21) Anmeldenummer: 24187253.0
(22) Anmeldetag: 08.07.2024
(51) Int. Cl.: H02J 4/00, H02J 13/00

(54) **REGELSYSTEM ZUM REGELN VON ENERGIEFLÜSSEN**

(30) Priorität: 07.07.2023 DE 102023118087
(71) Anmelder: LiCuSpace GmbH, 23966 Wismar (DE)
(72) Erfinder: Gutzmann, Helmut, 23974 Blowatz (DE)
(74) Vertreter: Heinemeyer, Karsten

(57) **Zusammenfassung**

Die Erfindung betrifft ein Regelsystem (100) zum Regeln von Energieflüssen (105) innerhalb eines Gesamtsystems (110) aus einer Mehrzahl von Energiequellen (120) und einer Mehrzahl von Energieverbrauchern (130). Hierfür umfasst das Regelsystem eine Steuereinheit (140) mit einer Mehrzahl von AC/DC-Schnittstellen (142) zum Empfangen und Anpassen der Energieflüsse innerhalb des Gesamtsystems, und mit einer Mehrzahl von Signalschnittstellen (144) zum Erfassen von Daten (145) aus dem Gesamtsystem. Weiterhin umfasst das Regelsystem eine Mehrzahl von Energieflussmessern (150) und eine Modellierungseinheit (160). Die Modellierungseinheit ist mit der Steuereinheit datentechnisch verbunden und ist angeordnet und ausgebildet, basierend auf den erfassten Daten aus dem Gesamtsystem, einer vorbestimmten Regelstrategie (162) und einem aktuellen Energieflussmodell (164) eine Anzahl von auszuführenden Anpassungen (170) der Energieflüsse zu bestimmen und an die Steuereinheit auszugeben. Dabei ist die Modellierungseinheit ausgebildet, die erfassten Daten mit früher gemäß dem aktuellen Energieflussmodel erwarteten Daten zumindest teilweise zu vergleichen und abhängig von diesem Vergleich ein neues aktuelles Energieflussmodell (165) zu bestimmen und für die erfassten Daten anzuwenden.

## Beschreibung

Die Erfindung betrifft ein Regelsystem zum Regeln von Energieflüssen innerhalb eines Gesamtsystems aus einer Mehrzahl von Energiequellen und einer Mehrzahl von Energieverbrauchern. Weiterhin betrifft die Erfindung ein Verfahren zum Regeln von Energieflüssen innerhalb eines Gesamtsystems aus einer Mehrzahl von Energiequellen und einer Mehrzahl von Energieverbrauchern, sowie ein Computerprogramm mit einem Programmcode zur Durchführung des erfindungsgemäßen Verfahrens.

Management-Systeme für eine Steuerung und/oder Regelung von Energieflüssen bei mehreren Energieverbrauchern und Energiequellen sind grundsätzlich bekannt. Angesichts immer mehr privat genutzter Photovoltaikanlagen hat sich dabei ein Bilanzieren von eingespeisten Energieflüssen und privat genutzten Energieflüssen als übliches Vorgehen etabliert.

Ebenfalls bekannt sind Regelsystem zum Regeln von Energieflüssen, bei denen eine bevorzugte Nutzungszeit von Energieverbrauchern, wie beispielsweise Waschmaschinen, Spülmaschinen, Wallbox für Elektromobilität oder dergleichen, bei der Steuerung dieser Energieverbraucher berücksichtigt wird. So können Kosten des Energieverbrauchs innerhalb eines Haushalts reduziert werden.

Aufgabe der vorliegenden Erfindung ist es, ein verbessertes Regelsystem, insbesondere ein besonders einfach an individuelle Randbedingungen adaptierbares Regelsystem, bereitzustellen.

Gemäß einem ersten Aspekt der Erfindung wird zur Lösung dieser Aufgabe ein Regelsystem zum Regeln von Energieflüssen innerhalb eines Gesamtsystems aus einer Mehrzahl von Energiequellen und einer Mehrzahl von Energieverbrauchern vorgeschlagen. Das Regelsystem umfasst hierfür eine Steuereinheit, eine Mehrzahl von Energieflussmessern und eine Modellierungseinheit.

Die Steuereinheit hat eine Mehrzahl von AC/DC-Schnittstellen zum Empfangen und Anpassen der Energieflüsse innerhalb des Gesamtsystems, und hat eine Mehrzahl von Signalschnittstellen zum Erfassen von Daten aus dem Gesamtsystem, und hat eine Nutzerschnittstelle zum Erfassen einer Nutzereingabe.

Die Mehrzahl von Energieflussmessern sind angeordnet und ausgebildet, Daten betreffend einen jeweils vorliegenden Energiefluss innerhalb des Gesamtsystems an die Steuereinheit auszugeben.

Die Modellierungseinheit ist mit der Steuereinheit datentechnisch verbunden und ist angeordnet und ausgebildet, basierend auf den erfassten Daten aus dem Gesamtsystem, einer vorbestimmten Regelstrategie und einem aktuellen Energieflussmodell eine Anzahl von auszuführenden Anpassungen der Energieflüsse zu bestimmen und an die Steuereinheit auszugeben, wobei die Modellierungseinheit weiter ausgebildet ist, die erfassten Daten mit früher gemäß dem aktuellen Energieflussmodel erwarteten Daten zumindest teilweise zu vergleichen und abhängig von diesem Vergleich ein neues aktuelles Energieflussmodell zu bestimmen und für die erfassten Daten anzuwenden.

Im Rahmen der Erfindung wurde erkannt, dass die Energieflüsse in einem Gesamtsystem, wie etwa in einem gewerbespezifischen Gesamtsystem ein dynamisches System bilden. Dieser Dynamik wird erfindungsgemäß dadurch begegnet, dass vorzugsweise stets alle relevanten Energieflüsse erfasst und für eine Anpassung des Energieflussmodells genutzt werden.

Besonders vorteilhaft werden durch das erfindungsgemäße Regelsystem unerwartete Entwicklung in den erfassten Daten schnell erkannt und für ein Bestimmen eines neuen aktuellen Energieflussmodells verwendet.

Schließlich erlaubt das Verwenden einer vorbestimmten Regelstrategie eine individuelle Zielsetzung für das erfindungsgemäße Regelsystem. So können alternativ oder ergänzend zu dem offenkundig häufigsten Ziel solch einer Regelung, nämlich einer Minimierung der verursachten Kosten für einen Nutzer des Regelsystems, auch andere Ziele für das Regelsystem vorbestimmt werden, um die entsprechende vorbestimmte Regelstrategie bereitzustellen.

Vorzugsweise wird die Regelstrategie dabei über die mindestens eine Nutzerschnittstelle des Regelsystems eingegeben, wie beispielsweise manuell eingegeben und/oder über ein automatisiertes System zum Bereitstellen der Regelstrategie eingegeben. Solch ein automatisiertes System kann beispielsweise bei einer Verknüpfung einer Mehrzahl von erfindungsgemäßen Regelsystem vorteilhaft sein.

Das Regelsystem umfasst ein Regeln der Energieflüsse in dem Sinne, dass entsprechend der vorbestimmten Regelstrategie auf ein Ziel hin geregelt wird. Einzelne Schritte der Anpassung der Energieflüsse durch die Steuereinheit bilden vor diesem Hintergrund dennoch ein Steuern von Energieflüssen. Daher steuert die Steuereinheit Energieflüsse zum Umsetzen einer übergeordneten Regelstrategie des Regelsystems.

Das Energieflussmodell ist beispielsweise ein Gleichungssystem mit einem aktuell vorgegebenen Parametersatz, bei dem anhand der erfassten Daten die aktuell auszuführenden Anpassungen bestimmt werden. Durch den Vergleich zwischen erfassten Daten und erwarteten Daten können die aktuell vorgegebenen Parameter dynamisch angepasst werden um einen neuen aktuell vorgegebenen Parametersatz zu bestimmen. Alternativ oder ergänzend kann auch eine Struktur des Gleichungssystems dynamisch anpassbar sein.

Die Nutzereingabe über die Nutzerschnittstelle kann beispielsweise die zu verwendende Regelstrategie indizieren und/oder eine manuelle Eingabe von zu erfassenden Daten ermöglichen und/oder eine manuelle Anpassung des Gesamtsystems durch eine Anpassung der vorliegenden Energiequellen und/oder Energieverbrauchern ermöglichen. Alternativ kann die Nutzerschnittstelle auch ausschließlich eine Ausgabe von Informationen an einen Nutzer des Regelsystems bereitstellen.

Die Daten betreffend einen jeweiligen Energiefluss bilden eine Untermenge der erfassten Daten des Gesamtsystems, da diese erfassten Daten natürlich noch weitere Charakteristika des Gesamtsystems neben den Energieflüssen enthalten können.

Nachfolgend werden bevorzugte Ausführungsformen des erfindungsgemäßen Regelsystems beschrieben.

In einer besonders bevorzugten Ausführungsform umfasst die vorbestimmte Regelstrategie zumindest eine der folgenden Strategien: Maximierung eines Füllstandes eines Energiespeichers des Gesamtsystems; Minimierung eines Füllstands eines Energiespeichers des Gesamtsystems; Reduzierung von Kosten eines Energieverbrauchs des Gesamtsystems; Maximierung einer Vergütung aus Energiequellen des Gesamtsystems; Umsetzung einer Sperrzeitenregelung von Energieverbrauchern des Gesamtsystems; Umsetzung einer Priorisierungsstruktur von Energiequellen und/oder Energieverbrauchern des Gesamtsystems. Diese Strategien bilden beispielhafte Regelstrategien, die zu einer vorteilhaften Verwendung des erfindungsgemäßen Regelsystems führen. Eine Sperrzeitenregelung ist eine Regelung, bei der vorbestimmte Sperrzeiten für die Verwendung einer Anzahl von Energieverbrauchern bei der Regelung der Energieflüsse berücksichtigt werden. Eine Priorisierungsstruktur ist eine vorgegebene Hierarchie von Energiequellen und/oder Energieverbrauchern, nach der die entsprechenden Geräte angesteuert werden. Die Sperrzeitenregelung und/oder die Priorisierungsstruktur werden in einer bevorzugten Variante dieser Ausführungsform über die Nutzerschnittstelle dem Regelsystem bereitgestellt.

In einer besonders bevorzugten Ausführungsform basiert der Vergleich der erfassten Daten durch die Modellierungseinheit zumindest teilweise auf einer Mustererkennung innerhalb der erfassten Daten über ein vorbestimmtes Zeitintervall. Solch eine Mustererkennung umfasst beispielsweise eine zeitlich wiederkehrende Struktur von Energieverbräuchen und/oder eingespeisten Energien. Die Mustererkennung kann dabei eine qualitative Erkennung, also eine Erkennung der wiederkehrenden Strukturen und/oder eine quantitative Erkennung, also eine Erkennung von konkreten Werten, beispielsweise eines Energieflusses innerhalb des Gesamtsystems, umfassen.

In einer bevorzugten Ausführungsform stammen die erfassten Daten aus Quellen, die sowohl innerhalb des Gesamtsystems, als auch außerhalb des Gesamtsystem angeordnet sind. In dieser Ausführungsform können vorteilhaft Daten durch das erfindungsgemäße Regelsystem berücksichtigt werden, die sich nicht nur aus dem Gesamtsystem heraus ergeben. In einer bevorzugten Variante dieser Ausführungsform umfassen die erfassten Daten, die aus Quellen stammen, die außerhalb des Gesamtsystems angeordnet sind, zumindest eine der folgenden Datentypen: Wetterdaten; Energiepreisentwicklungsdaten; Daten zu vorbestimmten Energieverbrauchsereignissen; Planungsdaten aus einem Kalenderinterface. Derartige Datentypen können vorteilhaft über ein externes Netzwerk erfasst werden. Vorzugsweise weist die Steuereinheit hierfür eine Netzwerkschnittstelle zum Erfassen von Daten eines solchen Datentyps auf. Es ist allgemein bekannt, dass Daten von derartigen Datentypen, wie beispielsweise Wetterdaten und Energiepreisentwicklungsdaten, im Internet frei verfügbar sind, so dass über eine entsprechende Netzwerkschnittstellen besonders einfach und vorteilhaft auf derartige Daten zugegriffen werden kann. Das Kalenderinterface kann beispielsweise vorgegebene externe Kalenderdaten bereitstellen und/oder individuell hinterlegte Kalenderdaten bereitstellen. Vorbestimmte Energieverbrauchsereignisse sind beispielsweise Ereignisse, die von einem Wochentag, einer Jahreszeit, einem Vorliegen eines Feiertags, einem Wetterereignis, einer regionalen Feierlichkeit und/oder dergleichen abhängen.

In einer besonders bevorzugten Ausführungsform weist das erfindungsgemäße Regelsystem weiterhin eine Spiegeleinheit auf, welche angeordnet und ausgebildet ist, Signalschnittstellen von externen Energiequellen und/oder externen Energieverbrauchern des Gesamtsystems für die Bestimmung der auszuführenden Anpassungen durch die Modellierungseinheit zu spiegeln, wobei die durch die Modellierungseinheit erfassten Daten zumindest teilweise aus der Spiegeleinheit stammen. Eine solche Spiegeleinheit kann besonders vorteilhaft ein schnelles automatisiertes Lernen des erfindungsgemäßen Regelsystems ermöglichen. So können die Energieflüsse auch dann entsprechend der Regelstrategie vorteilhaft geregelt werden, wenn innerhalb des Gesamtsystems quasistatische Energiezustände vorliegen, während die Energielevel von externen Energiequellen und/oder externen Energieverbrauchern stark variieren. Beispielsweise kann so bei äußerem Energieüberangebot und negativen Energiepreisen Energie aufgenommen werden und bei umgekehrter Situation wieder abgegeben werden, ohne einen inneren quasistatischen Zustand zu verändern. Entsprechend ist die Spiegeleinheit auch vorteilhaft, wenn externe Energiequellen und/oder externe Energieverbraucher ein quasistatisches Verhalten aufweisen und innerhalb des Gesamtsystems eine große Dynamik existiert. Die externen Komponenten dieser Ausführungsform sind externe Komponenten des Gesamtsystems, da sie nur in Bezug auf das vorbestimmte Gesamtsystem extern oder intern sein können. In diesem Sinne sind externe Komponenten des Gesamtsystems keine dem Gesamtsystem zugehörigen Komponenten, aber mit dem Gesamtsystem offenbar in Verbindung stehende Komponenten.

In einer weiteren vorteilhaften Ausführungsform berücksichtigt die Modellierungseinheit für die Ermittlung der Anzahl der auszuführenden Anpassungen der Energieflüsse eine Ausgabevarianz, insbesondere eine vorbestimmte Ausgabevarianz, welche beim Vergleich mit den erwarteten Daten im Rahmen einer zu erwartenden Ergebnisvarianz berücksichtigt wird, um das neue aktuelle Energieflussmodell zu bestimmen. Durch eine derartige Ausgabevarianz können beispielsweise vorteilhaft Parameter-Modifikationen oder dergleichen getestet werden um daraufhin zu überprüfen, ob ein Ergebnis des Regelsystems verbessert wird, insbesondere ob eine Übereinstimmung zwischen aktuell erfassten Daten und früher erwarteten Daten vergrößert wird. So kann die Berücksichtigung einer vorbestimmten Ausgabevarianz zu einem verbesserten automatisierten Lernverhalten des erfindungsgemäßen Regelsystems führen. Die Ausgabevarianz kann als Varianz innerhalb der ausgegebenen auszuführenden Anpassungen der Energieflüsse und/oder als Varianz, insbesondere als Parametervarianz, innerhalb des aktuellen Energieflussmodells umgesetzt sein.

In einer besonders bevorzugten Ausführungsform ist die Modellierungseinheit weiterhin ausgebildet, das neue aktuelle Energieflussmodell basierend auf einem neuronalen Netzwerk zu berechnen, welches zumindest mit den erfassten Daten aus dem Gesamtsystem, der vorbestimmten Regelstrategie und dem aktuellen Energieflussmodell versorgt ist. Die Modellierungseinheit gemäß dieser Ausführungsform erlaubt vorteilhaft ein automatisiertes Lernen des erfindungsgemäßen Regelsystems. Das automatisierte Lernen beruht dabei auf den erfassten Daten, also insbesondere auf den durch die Steuereinheit über die entsprechenden Schnittstellen erfassten Daten. Diese Daten werden in Kombination mit der aktuell vorliegenden vorbestimmten Regelstrategie durch das neuronale Netzwerk ausgewertet, um das neue aktuelle Energieflussmodell zu berechnen. Vorzugsweise berücksichtigt das neuronale Netzwerk zusätzlich eine vorbestimmte Ausgabevarianz entsprechend der vorhergehenden Ausführungsform. Insbesondere kann die vorbestimmte Ausgabevarianz eine durch das neuronale Netzwerk vorbestimmte Ausgabevarianz sein. So kann das neuronale Netzwerk vorteilhaft eine Geschwindigkeit und/oder eine Dynamik eines automatisierten Lernens des erfindungsgemäßen Regelsystems festlegen.

In einer weiteren Ausführungsform basiert das Bestimmen des aktuellen Energieflussmodells durch die Modellierungseinheit auf einem jeweiligen Energiequellen-Modell einer Anzahl von Energiequellen des Gesamtsystems. In dieser Ausführungsform werden durch die Modellierungseinheit vorteilhaft charakteristische Merkmale der vorliegenden Energiequellen des Gesamtsystems berücksichtigt. Vorzugsweise umfasst ein jeweiliges Energiequellen-Modell einen charakteristischen Verlauf einer bereitgestellten Energie über die Zeit und/oder die diesen Verlauf charakterisierenden Kenngrößen. Hierbei werden vorzugsweise weitere Parameter, wie etwa eine aktuelle Jahreszeit, ein vorliegender Wochentag, eine aktuelle Wetterprognose und/oder dergleichen berücksichtigt.

In einer besonders bevorzugten Variante der vorhergehenden Ausführungsform stellt das jeweilige Energiequellen-Modell eine Überlagerung von zeitintervall-spezifischen Energiequellen-Modellen dar. Durch die Überlagerung von Zeitintervall-spezifischen Energiequellen-Modellen werden charakteristische Merkmale eines Verhaltens der Energiequelle auf einer bestimmten Zeitskala für verschiedene Zeitskalen, also für verschiedene Zeitintervalle, berücksichtigt. In dieser Variante kann das erfindungsgemäße Regelsystem besonders vorteilhaft auf kurzfristige Änderungen von Randbedingungen des Gesamtsystems, die eventuell nur Auswirkungen auf besonders langen oder besonders kurzen Zeitskalen haben, reagieren, ohne dass hierfür ein langwieriger Lernprozess notwendig ist.

Gemäß einem zweiten Aspekt der Erfindung wird zur Lösung der oben genannten Aufgabe ein Verfahren zum Regeln von Energieflüssen innerhalb eines Gesamtsystems aus einer Mehrzahl von Energiequellen und einer Mehrzahl von Energieverbrauchern vorgeschlagen. Das erfindungsgemäße Verfahren weist dabei die folgenden Schritte auf:
- Ausgeben von Daten betreffend einen jeweils vorliegenden Energiefluss innerhalb des Gesamtsystems an eine Steuereinheit;
- Empfangen der Energieflüsse innerhalb des Gesamtsystems durch die Steuereinheit;
- Bestimmen und Ausgeben einer Anzahl von auszuführender Anpassungen der Energieflüsse an die Steuereinheit, basierend auf den erfassten Daten aus dem Gesamtsystem, einer vorbestimmten Regelstrategie und einem aktuellen Energieflussmodell, wobei die erfassten Daten mit früher gemäß dem aktuellen Energieflussmodel erwarteten Daten zumindest teilweise verglichen werden, so dass abhängig von diesem Vergleich ein neues aktuelles Energieflussmodell bestimmt und für die erfassten Daten angewendet wird; und
- Anpassen der Energieflüsse innerhalb des Gesamtsystems basierend auf der ausgegebenen Anzahl von auszuführenden Anpassungen der Energieflüsse.

Das Verfahren gemäß dem zweiten Aspekt der Erfindung wird durch das Regelsystem gemäß dem ersten Aspekt der Erfindung ausgeführt, so dass es die gleichen Vorteile aufweist. Insbesondere erlaubt das erfindungsgemäße Verfahren eine dynamische Anpassung der Regelung der Energieflüsse innerhalb des Gesamtsystems durch eine regelmäßige Bestimmung eines neuen aktuellen Energieflussmodells. Weiterhin erlaubt das erfindungsgemäße Verfahren vorteilhaft ein automatisiertes Anpassen der Energieflüsse innerhalb des Gesamtsystems ohne dass hierfür manuelle Eingaben während eines entsprechenden Regelprozesses notwendig sind.

Vorzugsweise werden die Schritte des erfindungsgemäßen Verfahrens in der angegebenen Reihenfolge ausgeführt. Dabei werden die Schritte erfindungsgemäß wiederholt ausgeführt, um ein regelmäßiges Anpassen der Energieflüsse innerhalb des Gesamtsystems basierend auf den erfassten Daten zu ermöglichen.

In einer bevorzugten Ausführungsform des erfindungsgemäßen Verfahrens, weist dieses weiterhin den Schritten auf:
- Spiegeln von Signalschnittstellen von externen Energiequellen und/oder externen Energieverbrauchern des Gesamtsystems für die Bestimmung der auszuführenden Anpassungen.

Durch das Spiegeln der Signalschnittstellen in dieser Ausführungsform wird ein besonders schnelles Lernen im Rahmen des erfindungsgemäßen Verfahrens unterstützt. So kann beispielsweise eine hohe Dynamik bei stark variierenden äußeren Energien ausgeglichen werden, ohne dass dabei ein fast stationärer Zustand der inneren Energien verlassen wird. Analog verhält es sich bei einer großen Dynamik der inneren Energien verglichen mit einem fast stationären äußeren Umfeld des Gesamtsystems.

In einer besonders bevorzugten Ausführungsform weist das erfindungsgemäße Verfahren weiterhin den Schritt auf:
- Eingabe der vorbestimmten Regelstrategie über eine Nutzerschnittstelle.

Die Eingabe der zu verwendenden vorgesetzten Regelstrategie stellt einen bevorzugten Zweck der Nutzerschnittstelle dar. Alternativ oder ergänzend kann die Nutzerschnittstelle zur Eingabe von Daten, wie etwa Wetterdaten, Kalenderdaten, Urlaubsdaten, von Randbedingungen des Gesamtsystems, wie etwa einem neuen Energieverbrauchern und/oder einer neuen Energiequelle verwendet werden. In einer bevorzugten Variante dieser Ausführungsform umfasst das erfindungsgemäße Verfahren auch die Eingabe einer Ausgabevarianz für die Ermittlung der Anzahl der auszuführenden Anpassungen der Energieflüsse über die Nutzerschnittstelle.

Gemäß einem dritten Aspekt der Erfindung wird zur Lösung der oben genannten Aufgabe ein Computerprogramm mit einem Programmcode zur Durchführung eines Verfahrens gemäß dem zweiten Aspekt der Erfindung vorgeschlagen. Dabei wird der Programmcode auf einem Computer, einem Prozessor oder einer programmierbaren Hardwarekomponente ausgeführt. Vorzugsweise werden mehrere Schritte des erfindungsgemäßen Verfahrens durch einen gemeinsamen Computer, einen gemeinsamen Prozessor oder eine gemeinsame programmierbare Hardwarekomponente ausgeführt. Vorzugsweise sind die einzelnen Schritte dabei zumindest auf Software-Ebene voneinander durch entsprechende Softwareblöcke getrennt. Besonders bevorzugt werden alle Schritte des erfindungsgemäßen Verfahrens auf einem gemeinsamen Computer, einem gemeinsamen Prozessor oder einer gemeinsamen programmierbaren Hardwarekomponente ausgeführt.

Die Erfindung soll nun anhand von in den Figuren schematisch dargestellten, vorteilhaften Ausführungsbeispielen näher erläutert werden. Von diesen zeigen im Einzelnen:
- Fig. 1: eine schematische Darstellung eines ersten Ausführungsbeispiels eines Regelsystems gemäß einem ersten Aspekt der Erfindung;
- Fig. 2: eine schematische Darstellung eines zweiten Ausführungsbeispiels des Regelsystems gemäß dem ersten Aspekt der Erfindung;
- Fig. 3: eine schematische Darstellung eines dritten Ausführungsbeispiels des Regelsystems gemäß dem ersten Aspekt der Erfindung; und
- Fig. 4: ein Flussdiagramm eines Ausführungsbeispiels eines Verfahrens gemäße einem zweiten Aspekt der Erfindung.

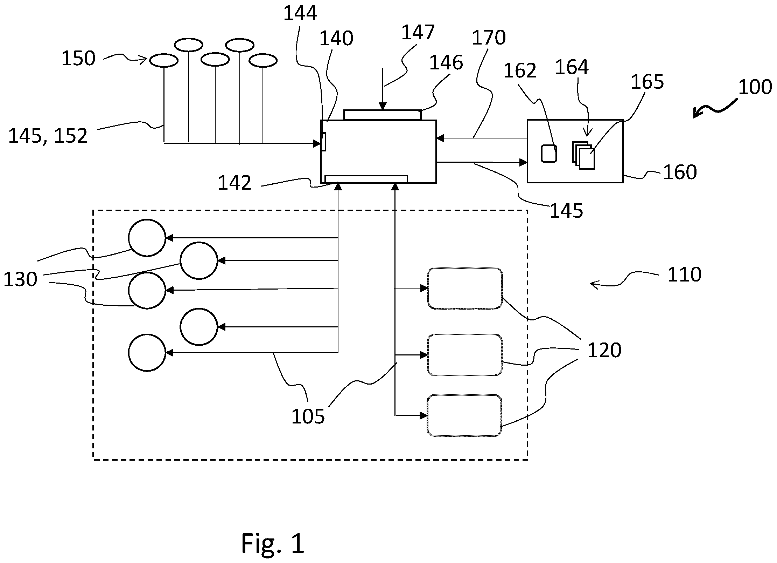

Fig. 1 zeigt eine schematische Darstellung eines ersten Ausführungsbeispiels eines Regelsystems 100 gemäß einem ersten Aspekt der Erfindung.

Das Regelsystem 100 ist zum Regeln von Energieflüssen 105 innerhalb eines Gesamtsystems 110 aus einer Mehrzahl von Energiequellen 120 und einer Mehrzahl von Energieverbrauchern 130 ausgebildet. Hierfür umfasst das Regelsystem 100 eine Steuereinheit 140, eine Mehrzahl von Energieflussmessern 150 und eine Modellierungseinheit 160.

Die Steuereinheit 140 weist eine Mehrzahl von AC/DC-Schnittstellen 142 zum Empfangen und Anpassen der Energieflüsse 105 innerhalb des Gesamtsystems 110 auf. Über die AC/DC-Schnittstellen 142 können Energiemengen und Energieflüsse direkt angepasst und dadurch verändert werden. Weiterhin verfügt die Steuereinheit 140 über eine Mehrzahl von Signalschnittstellen 144 zum Erfassen von Daten 145 aus dem Gesamtsystem 110. Dabei können mehrere Signalschnittstellen 144 direkt an der Steuereinheit ausgebildet sein und/oder mehrere Signalschnittstellen sind einem Adapter angeordnete, der eine entsprechende Schnittstelle mit der Steuereinheit aufweist. Der Adapter wäre im Sinne der Erfindung ein Teil der Steuereinheit. Schließlich weist die Steuereinheit 140 erfindungsgemäß eine Nutzerschnittstelle 146 zum Erfassen einer Nutzereingabe 147 auf. Die Nutzerschnittstelle 146 erlaubt eine manuelle Dateneingabe. Vorzugsweise bietet die Nutzerschnittstelle 146 zudem eine Visualisierungsmöglichkeit für die Visualisierung von Daten.

Die Mehrzahl von Energieflussmessern 150 ist angeordnet und ausgebildet, Daten 152 betreffend einen jeweils vorliegenden Energiefluss innerhalb des Gesamtsystems 110 an die Steuereinheit 140 auszugeben. Die Energieflussmesser 150 sind dabei in Fig. 1 aus Gründen der Übersichtlichkeit separat zu den Energiequellen 120 und den Energieverbrauchern 130 dargestellt, wobei sie aber physisch vorzugsweise an einer entsprechenden Stromleitung eines Energieverbrauchers 130 und/oder einer Energiequelle 120 angeordnet sind. Die Funktionsweise solcher bereits in vielen Haushalten verwendeter Energieflussmesser 150 ist allgemein bekannt und wird daher im Folgenden nicht detailliert erläutert. Die Daten 152 betreffend den jeweils vorliegenden Energiefluss bilden eine Untermenge der gesamten erfassten Daten 145.

Die Modellierungseinheit 160 ist mit der Steuereinheit 140 datentechnisch verbunden. Dadurch empfängt sie die durch die Steuereinheit 140 empfangenen Daten 145. Die Modellierungseinheit 160 ist zudem angeordnet und ausgebildet, basierend auf den erfassten Daten 145 aus dem Gesamtsystem, einer vorbestimmten Regelstrategie 162 und einem aktuellen Energieflussmodell 164 eine Anzahl von auszuführenden Anpassungen 170 der Energieflüsse zu bestimmen und an die Steuereinheit 140 auszugeben. Die Regelstrategie 162 kann vorzugsweise über die Nutzerschnittstelle 146 in der Modellierungseinheit 160 hinterlegt werden. Die Modellierungseinheit geht bei der Bestimmung der Anzahl von auszuführenden Anpassungen 170 der Energieflüsse so vor, dass die erfassten Daten 145 mit früher gemäß dem aktuellen Energieflussmodel 164 erwarteten Daten zumindest teilweise verglichen werden und abhängig von diesem Vergleich ein neues aktuelles Energieflussmodell 165 bestimmt und für die erfassten Daten 145 angewendet wird.

Das Energieflussmodell 165 ist dabei vorzugsweise ein Gleichungssystem, dessen Struktur über die vorbestimmte Regelstrategie 162 ebenfalls vorbestimmt ist. Vorzugsweise entspricht die Bestimmung des neuen aktuellen Energieflussmodells 165 dabei einer Veränderung von Parametern des Gleichungssystems unter Beibehaltung der vorbestimmten Struktur des Gleichungssystems.

Durch die ständige Veränderung des verwendeten aktuellen Energieflussmodells 164 lernt die Modellierungseinheit 160 Verhaltensweisen der Energiequellen 120 und der Energieverbraucher 130, was über einen gewissen Zeitraum zu einer verbesserten Umsetzung der Regelstrategie 162 führt.

Die vorbestimmte Regelstrategie 162 umfasst dabei vorzugsweise zumindest eine der folgenden Strategien: Maximierung eines Füllstandes eines Energiespeichers des Gesamtsystems 110; Minimierung eines Füllstands eines Energiespeichers des Gesamtsystems 110; Reduzierung von Kosten eines Energieverbrauchs des Gesamtsystems 110; Maximierung einer Vergütung aus Energiequellen 120 des Gesamtsystems 110; Umsetzung einer Sperrzeitenregelung von Energieverbrauchern 130 des Gesamtsystems 110; Umsetzung einer Priorisierungsstruktur von Energiequellen 120 und/oder Energieverbrauchern 130 des Gesamtsystems 110. Derartige vorbestimmbare Regelstrategien 162 erlauben eine besonders vorteilhafte Individualisierung des erfindungsgemäßen Regelsystems 100.

Beispiele für Energieverbraucher 130 des Gesamtsystems 110 können sein: Klimatisierung, Heißwasserspeicher, Warmwasserbereitung, Raumbeleuchtung, Küche mit Verbrauchern, zimmerspezifische Elektrogeräte, Wallbox für Elektromobilität, Auto, Batteriespeicher, Energieanschluss an Hausaußenfläche.

Beispiele für Energiequellen 120 des Gesamtsystems 110 können sein: Heißwasserspeicher, Photovoltaikmodul, Wasserstoffspeicher mit Brennstoffzelle für Heizung/Strom, Batteriespeicher, Auto, Windrad, Energieanschluss an Hausaußenfläche, Wasserstoff-Gasanschluss an Hausaußenfläche, Fernwärmenetz.

Schon diese beispielhafte Konstellation aus Energiequellen 120 und Energieverbrauchern 130 zeigt die Notwendigkeit eines mehrdimensionalen vernetzten Regelraums für das erfindungsgemäße Regelsystem 100.

Die dargestellten Komponenten, insbesondere die Steuereinheit 140 und die Modellierungseinheit 160, können räumlich getrennt oder zumindest teilweise kombiniert, wie beispielsweise in einem gemeinsamen Modul, vorliegen, welches aber zumindest auf Softwareebene in die beschriebenen Komponenten unterteilt ist.

Die Schnittstellen der Speichereinheit können in den dargestellten Ausführungsbeispielen als zumindest teilweise kombinierte Schnittstellen vorliegen, so dass beispielsweise manche Daten über eine gemeinsame Schnittstelle erfasst werden. Insbesondere die Signalschnittstelle kann erfindungsgemäß eine einzelne Schnittstelle sein, die Daten von verschiedenen anderen Schnittstellen empfängt, welche im Sinne der Erfindung die Mehrzahl von Signalschnittstellen der Steuereinheit bilden.

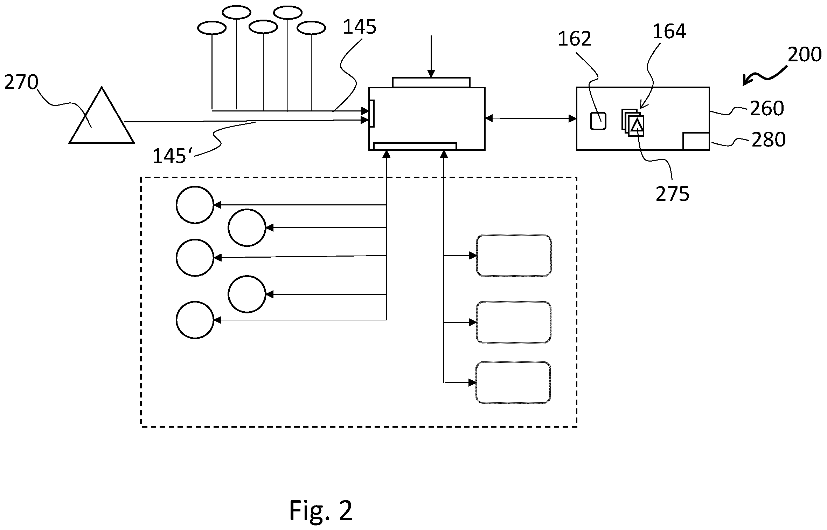

Fig. 2 zeigt eine schematische Darstellung eines zweiten Ausführungsbeispiels des Regelsystems 200 gemäß dem ersten Aspekt der Erfindung.

Das Regelsystem 200 entspricht im Wesentlichen dem in Fig. 1 gezeigten Regelsystem 100, wobei das Regelsystem 200 zusätzlich Daten 145' erfasst, die aus Quellen stammen, nämlich vorliegend einem externen Netzwerk 270, die außerhalb des Gesamtsystems 110 angeordnet sind. Somit umfassen die erfassten Daten 145, 145' Daten aus Quellen, die sich innerhalb und außerhalb des Gesamtsystems 110 befinden.

Die erfassten Daten 145`, die aus Quellen stammen, die außerhalb des Gesamtsystems angeordnet sind, können vorzugsweise zumindest eine der folgenden Datentypen umfassen: Wetterdaten; Energiepreisentwicklungsdaten; Daten zu vorbestimmten Energieverbrauchsereignissen; Planungsdaten aus einem Kalenderinterface. Derartige Daten 145' erlauben eine Anpassung des Regelsystems 200 an externe Entwicklungen und Vorgaben.

Zum Hinterlegen der erfassten Daten 145, 145' verfügt die Modellierungseinheit 260 zudem über ein Speichermodul 280. Das Speichermodul 280 kann für ein Speichern verschiedener auswählbarer Regelstrategien 162, der gemäß dem aktuellen Energieflussmodell 164 erwarteten Daten, der verwendeten Energieflussmodelle 164 und/oder dergleichen dienen.

Um ein Selbstlernen durch die Modellierungseinheit zu ermöglichen, berücksichtigt die Modellierungseinheit 260 für die Ermittlung der Anzahl der auszuführenden Anpassungen 170 der Energieflüsse eine Ausgabevarianz 275, insbesondere eine vorbestimmte Ausgabevarianz. Diese Ausgabevarianz 275 stellt vorzugsweise eine Varianz innerhalb der auszuführenden Anpassungen 170 und/oder innerhalb von Parametern des aktuellen Energieflussmodells 164 dar. Die Größe dieser Ausgabevarianz 275 kann vorbestimmt sein oder selbstlernend und dadurch dynamisch vorgegeben sein. Durch das Vorsehen der Ausgabevarianz 275 wird beim darauffolgenden Vergleich mit den erwarteten Daten eine dadurch entstandene Streuung von Messgrößen im Rahmen einer zu erwartenden Ergebnisvarianz berücksichtigt, um das neue aktuelle Energieflussmodell 164 zu bestimmen. Die Bestimmung der zu berücksichtigenden Ergebnisvarianz erfolgt vorzugsweise durch eine vorbestimmte funktionale Abhängigkeit von der Ausgabevarianz 275.

Das Energieflussmodell basiert in dem dargestellten Ausführungsbeispiel zumindest teilweise auf einer Mustererkennung innerhalb der erfassten Daten über ein vorbestimmtes Zeitintervall, wie etwa einer vorbestimmten Anzahl von Stunden, Tagen, Wochen und/oder einer Kombination daraus. Dabei wird beispielsweise anhand der Mustererkennung ein entsprechender Parameter innerhalb des anzuwendenden aktuellen Energieflussmodells 164 angepasst, so dass die Erkennung eines Musters auch eine Anpassung der Energieflüsse zur Folge haben kann. Vorbestimmte Muster für die auszuführende Mustererkennung werden vorzugsweise in dem Speichermodul 280 hinterlegt.

Die Zeitintervalle für die Regelung können selbstlernend gewählt und/oder zumindest teilweise vorgegeben sein. Dabei liegt ein zeitlicher Abstand zwischen dem Bestimmen des Energieflussmodells und dem erfindungsgemäßen erneuten Bestimmen des Energieflussmodells vorzugsweise bei weniger als 30 min, insbesondere bei weniger als 15 min, besonders bevorzugt bei weniger als 5 min.

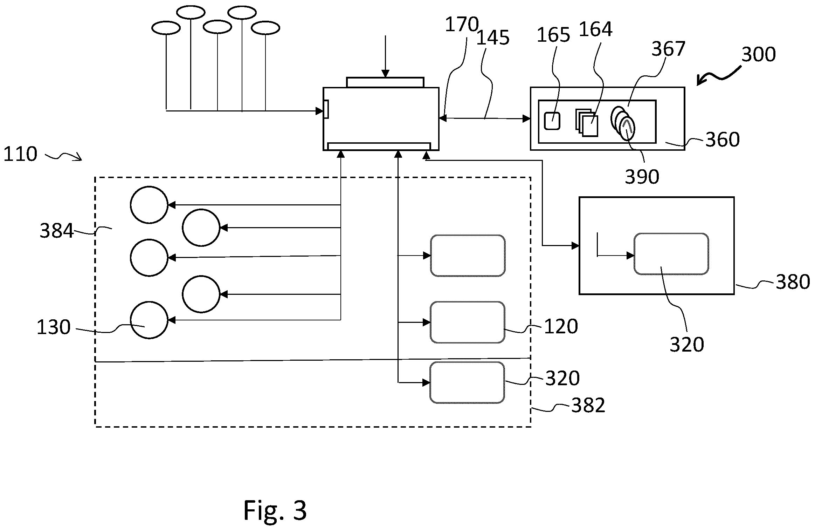

Fig. 3 zeigt eine schematische Darstellung eines dritten Ausführungsbeispiels des Regelsystems 300 gemäß dem ersten Aspekt der Erfindung.

Das Regelsystem 300 unterscheidet sich von dem in Fig. 1 dargestellten Regelsystem 100 unter anderem dadurch, dass es weiterhin eine Spiegeleinheit 380 aufweist, welche angeordnet und ausgebildet ist, Signalschnittstellen von externen Energiequellen 320 und/oder externen Energieverbrauchern des Gesamtsystems 110 für die Bestimmung der auszuführenden Anpassungen 170 durch die Modellierungseinheit 360 zu spiegeln, wobei die durch die Modellierungseinheit 360 erfassten Daten zumindest teilweise aus der Spiegeleinheit 380 stammen. In Fig. 3 sind die externen Energiequellen 320 und/oder Energieverbraucher in einem abgetrennten externen Bereich 382 dargestellt im Gegensatz zu den im internen Bereich 384 befindlichen internen Energiequellen 120 und/oder Energieverbrauchern 130. Durch die Spiegelung der externen Komponenten des Gesamtsystems 110 können verschiedene Dynamiken zwischen den internen Komponenten und den externen Komponenten des Gesamtsystems 110 besonders vorteilhaft berücksichtigt und für eine separate Auswertung und Regelung dieser Komponenten verwendet werden.

Schließlich ist in diesem Ausführungsbeispiel die Modellierungseinheit 360 zusätzlich ausgebildet, das neue aktuelle Energieflussmodell 164 basierend auf einem neuronalen Netzwerk 367 zu berechnen, welches zumindest mit den erfassten Daten 145 aus dem Gesamtsystem 110, der vorbestimmten Regelstrategie 165 und dem aktuellen Energieflussmodell 164 versorgt ist. Es können auch weitere Daten und Paramater von dem neuronalen Netzwerk 367 verwendet werden, aber die Versorgung mit zumindest diesen Größen stellt eine bevorzugte Mindestversorgung des neuronalen Netzwerkes 367 dar. Vorzugsweise wird dem neuronalen Netzwerk zusätzlich eine verwendete Ausgabevarianz bereitgestellt. Als Ausgabe gibt das neuronale Netzwerk 367 vorzugsweise neben dem neuen aktuellen Energieflussmodel 164 auch eine zu verwendende Geschwindigkeit der Regelung, also beispielsweise einen Zeitabstand zwischen zwei Bestimmungen des Energieflussmodells vor und/oder die auszuführenden Anpassungen der Energieflüsse 170.

In dem dargestellten Ausführungsbeispiel basiert das Bestimmen des aktuellen Energieflussmodells 164 durch die Modellierungseinheit 160 auf einem jeweiligen Energiequellen-Modell 390 einer Anzahl von Energiequellen 120 des Gesamtsystems 110. Durch die Verwendung des Energiequellen-Modells 390 kann auf besondere Charakteristika einer jeweiligen Energiequelle 120 bei der Bestimmung des Energieflussmodells eingegangen werden. Insbesondere können charakteristische Parameter von Kennlinien einer jeweiligen Energiequelle zu dem Energiequellen-Modell 390 beitragen und dadurch für das Energieflussmodell 164 berücksichtigt werden. Vorzugsweise stellt das jeweilige Energiequellen-Modell 390 eine Überlagerung von zeitintervall-spezifischen Energiequellen-Modellen dar. So kann das Verhalten der jeweiligen Energiequelle 120 auf verschiedenen Zeitskalen, also beispielsweise Kennwerte für ein erwartetes Verhalten für die nächsten Stunden, die nächsten Tage und/oder die nächsten Wochen, bei der regelmäßigen Bestimmung des aktuellen Energieflussmodells 164 berücksichtigt werden.

Energiequellen-Modelle 390 oder vergleichbare vorbestimmte Modelle können beispielsweise aus anderen Regelsystemen gewonnen worden sein und/oder über eine Trainingszeit der Modellierungseinheit vortrainiert worden sein, wobei in der Trainingszeit vorzugsweise keine reale Anpassung von Energieflüssen erfolgt ist.

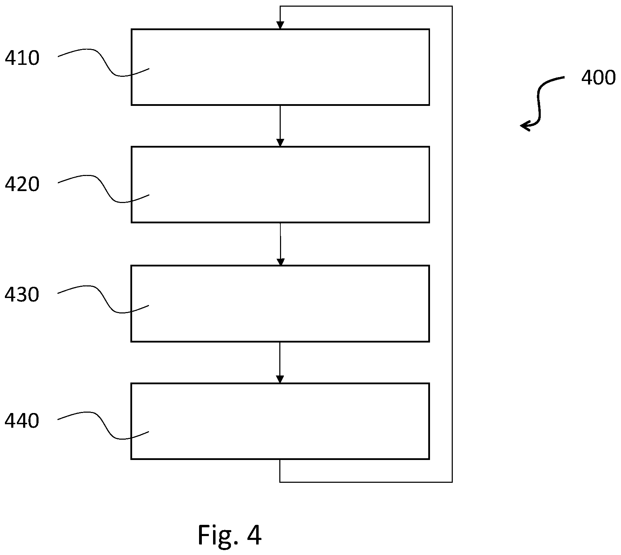

Fig. 4 zeigt ein Flussdiagramm eines Ausführungsbeispiels eines Verfahrens 400 gemäß einem zweiten Aspekt der Erfindung.

Das erfindungsgemäße Verfahren 400 ist zum Regeln von Energieflüssen innerhalb eines Gesamtsystems aus einer Mehrzahl von Energiequellen und einer Mehrzahl von Energieverbrauchern ausgebildet. Hierfür weist es die im Folgenden dargestellten Verfahrensschritte auf.

Ein erster Schritt 410 umfasst ein Ausgeben von Daten betreffend einen jeweils vorliegenden Energiefluss innerhalb des Gesamtsystems an eine Steuereinheit.

Ein weiterer Schritt 420 umfasst ein Empfangen der Energieflüsse innerhalb des Gesamtsystems durch die Steuereinheit.

Ein darauffolgender Schritt 430 umfasst ein Bestimmen und ein Ausgeben einer Anzahl von auszuführender Anpassungen der Energieflüsse an die Steuereinheit, basierend auf den erfassten Daten aus dem Gesamtsystem, einer vorbestimmten Regelstrategie und einem aktuellen Energieflussmodell, wobei die erfassten Daten mit früher gemäß dem aktuellen Energieflussmodel erwarteten Daten zumindest teilweise verglichen werden, so dass abhängig von diesem Vergleich ein neues aktuelles Energieflussmodell bestimmt und für die erfassten Daten angewendet wird.

Ein nächster Schritt 440 umfasst ein Anpassen der Energieflüsse innerhalb des Gesamtsystems basierend auf der ausgegebenen Anzahl von auszuführenden Anpassungen der Energieflüsse.

Die Schritte 410, 420, 430 und 440 werden vorzugsweise in der angegebenen Reihenfolge ausgeführt. So werden Daten zum Energiefluss erst ausgegeben und dann empfangen, um danach darauf basierend eine notwendige Anpassung der Energieflüsse zu bestimmen und auszugeben und abschließend auch umzusetzen. Vorzugsweise werden diese Schritte wiederholt in vorbestimmten Abständen ausgeführt. Hierdurch kann eine ständige Anpassung der Energieflüsse entsprechend der gewählten Regelstrategie erfolgen.

Ein Zeitintervall zwischen dem wiederholten Ausführen dieser Verfahrensschritte kann statisch vorbestimmt, dynamisch selbstlernend oder Energieflussmodellabhängig vorbestimmt sein. Vorzugsweise beträgt dieses Zeitintervall zwischen dem wiederholten Ausführen von Verfahrensschritten weniger als 30 min, insbesondere weniger als 15 min, besonders bevorzugt weniger als 5 Minuten.

Vorzugsweise weist das erfindungsgemäße Verfahren 400 zusätzlich den folgenden Schritt auf:
- Spiegeln von Signalschnittstellen von externen Energiequellen und/oder externen Energieverbrauchern des Gesamtsystems für die Bestimmung der auszuführenden Anpassungen.

In diesem nicht dargestellten Ausführungsbeispiel des Verfahrens 400 hat ein Unterschied zwischen einem dynamischen Verhalten von externen Energiequellen und/oder Energieverbrauchern und einem statischen Verhalten von internen Energiequellen und/oder Energieverbrauchern kaum einen gegenseitigen Einfluss. So kann bei einem Energieüberangebot und mithin negativen Energiepreisen Energie aufgenommen werden, ohne dass das interne Gleichgewicht aus Energieflüssen aufgegeben wird. Zudem kann durch das Spiegeln der externen Komponenten eine Anpassung des Regelsystems an ein dynamisches Umfeld vorteilhaft beschleunigt werden.

### Bezugszeichenliste

- 100, 200, 300: Regelsystem
- 105: Energiefluss
- 110: Gesamtsystem
- 120: Energiequelle
- 130: Energieverbraucher
- 140: Steuereinheit
- 142: AC/DC Schnittstelle
- 144: Signalschnittstelle
- 145, 145': erfasste Daten
- 146: Nutzerschnittstelle
- 147: Nutzereingabe
- 150: Energieflussmesser
- 152: Daten betreffend den Energiefluss
- 160, 260, 360: Modellierungseinheit
- 162: vorbestimmte Regelstrategie
- 164: aktuelles Energieflussmodell
- 165: neues aktuelles Energieflussmodell
- 170: Anzahl von auszuführenden Anpassungen
- 270: Netzwerk
- 275: Ausgabevarianz
- 280: Speichermodul
- 320: externe Energiequelle
- 367: Neuronales Netzwerk
- 380: Spiegeleinheit
- 382: externer Bereich
- 384: interner Bereich
- 390: Energiequellen-Modell
- 400: Verfahren
- 410, 420, 430, 440: Verfahrensschritte

## Patentansprüche

1. Regelsystem (100) zum Regeln von Energieflüssen (105) innerhalb eines Gesamtsystems (110) aus einer Mehrzahl von Energiequellen (120) und einer Mehrzahl von Energieverbrauchern (130), umfassend
- eine Steuereinheit (140) mit einer Mehrzahl von AC/DC-Schnittstellen (142) zum Empfangen und Anpassen der Energieflüsse (105) innerhalb des Gesamtsystems (110), und mit einer Mehrzahl von Signalschnittstellen (144)zum Erfassen von Daten (145) aus dem Gesamtsystem (110), und mit einer Nutzerschnittstelle (146) zum Erfassen einer Nutzereingabe (147);
- eine Mehrzahl von Energieflussmessern (150), welche angeordnet und ausgebildet sind, Daten (152) betreffend einen jeweils vorliegenden Energiefluss (105) innerhalb des Gesamtsystems (110) an die Steuereinheit (140) auszugeben; und
- eine Modellierungseinheit (160), welche mit der Steuereinheit (140) datentechnisch verbunden ist und welche angeordnet und ausgebildet ist, basierend auf den erfassten Daten (145) aus dem Gesamtsystem (110), einer vorbestimmten Regelstrategie (162) und einem aktuellen Energieflussmodell (164) eine Anzahl von auszuführenden Anpassungen (170) der Energieflüsse (105) zu bestimmen und an die Steuereinheit (140) auszugeben,
wobei die Modellierungseinheit (160) ausgebildet ist, die erfassten Daten (145) mit früher gemäß dem aktuellen Energieflussmodel (164) erwarteten Daten zumindest teilweise zu vergleichen und abhängig von diesem Vergleich ein neues aktuelles Energieflussmodell (165) zu bestimmen und für die erfassten Daten (145) anzuwenden.

2. Regelsystem (100) gemäß Anspruch 1, wobei die vorbestimmte Regelstrategie (162) zumindest eine der folgenden Strategien umfasst: Maximierung eines Füllstandes eines Energiespeichers des Gesamtsystems (110); Minimierung eines Füllstands eines Energiespeichers des Gesamtsystems (110); Reduzierung von Kosten eines Energieverbrauchs des Gesamtsystems (110); Maximierung einer Vergütung aus Energiequellen (120) des Gesamtsystems (110); Umsetzung einer Sperrzeitenregelung von Energieverbrauchern (130) des Gesamtsystems (110); Umsetzung einer Priorisierungsstruktur von Energiequellen (120) und/oder Energieverbrauchern (130) des Gesamtsystems (110).

3. Regelsystem (100) gemäß Anspruch 1 oder 2, wobei der Vergleich der erfassten Daten (145) durch die Modellierungseinheit (160) zumindest teilweise auf einer Mustererkennung innerhalb der erfassten Daten (145) über ein vorbestimmtes Zeitintervall basiert.

4. Regelsystem (200) gemäß mindestens einem der vorhergehenden Ansprüche,
wobei die erfassten Daten (145, 145`) aus Quellen stammen, die sowohl innerhalb des Gesamtsystems (110), als auch außerhalb des Gesamtsystem (110) angeordnet sind.

5. Regelsystem (200) gemäß Anspruch 4, wobei erfasste Daten (145, 145`), die aus Quellen stammen, die außerhalb des Gesamtsystems (110) angeordnet sind, zumindest eine der folgenden Datentypen umfassen: Wetterdaten; Energiepreisentwicklungsdaten; Daten zu vorbestimmten Energieverbrauchsereignissen; Planungsdaten aus einem Kalenderinterface.

6. Regelsystem (300) gemäß mindestens einem der vorhergehenden Ansprüche,
weiterhin aufweisend eine Spiegeleinheit (380), welche angeordnet und ausgebildet ist, Signalschnittstellen von externen Energiequellen (320) und/oder externen Energieverbrauchern des Gesamtsystems (110) für die Bestimmung der auszuführenden Anpassungen (170) durch die Modellierungseinheit (160) zu spiegeln, wobei die durch die Modellierungseinheit (160) erfassten Daten zumindest teilweise aus der Spiegeleinheit (380) stammen.

7. Regelsystem (200) gemäß mindestens einem der vorhergehenden Ansprüche,
wobei die Modellierungseinheit (160) für die Ermittlung der Anzahl der auszuführenden Anpassungen (170) der Energieflüsse (105) eine Ausgabevarianz (275), insbesondere eine vorbestimmte Ausgabevarianz, berücksichtigt, welche beim Vergleich mit den erwarteten Daten im Rahmen einer zu erwartenden Ergebnisvarianz berücksichtigt wird, um das neue aktuelle Energieflussmodell (165) zu bestimmen.

8. Regelsystem (300) gemäß mindestens einem der vorhergehenden Ansprüche,
wobei die Modellierungseinheit (360) ausgebildet ist, das neue aktuelle Energieflussmodell basierend auf einem neuronalen Netzwerk (367) zu berechnen, welches zumindest mit den erfassten Daten (145) aus dem Gesamtsystem (110), der vorbestimmten Regelstrategie (165) und dem aktuellen Energieflussmodell (164) versorgt ist.

9. Regelsystem (300) gemäß mindestens einem der vorhergehenden Ansprüche,
wobei das Bestimmen des aktuellen Energieflussmodells (164) durch die Modellierungseinheit (360) auf einem jeweiligen Energiequellen-Modell (390) einer Anzahl von Energiequellen (120) des Gesamtsystems (110) basiert.

10. Regelsystem (300) gemäß Anspruch 9, wobei das jeweilige Energiequellen-Modell (390) eine Überlagerung von zeitintervall-spezifischen Energiequellen-Modellen darstellt.

11. Verfahren (400) zum Regeln von Energieflüssen (105) innerhalb eines Gesamtsystems (110) aus einer Mehrzahl von Energiequellen (120) und einer Mehrzahl von Energieverbrauchern (130), aufweisend die Schritte
- Ausgeben von Daten (152) betreffend einen jeweils vorliegenden Energiefluss (105) innerhalb des Gesamtsystems (110) an eine Steuereinheit (140);
- Empfangen der Energieflüsse (105) innerhalb des Gesamtsystems (110) durch die Steuereinheit (140);
- Bestimmen und Ausgeben einer Anzahl von auszuführender Anpassungen (170) der Energieflüsse (105) an die Steuereinheit (140), basierend auf den erfassten Daten (145) aus dem Gesamtsystem (110), einer vorbestimmten Regelstrategie (162) und einem aktuellen Energieflussmodell (164), wobei die erfassten Daten (145) mit früher gemäß dem aktuellen Energieflussmodel (164) erwarteten Daten zumindest teilweise verglichen werden, so dass abhängig von diesem Vergleich ein neues aktuelles Energieflussmodell (165) bestimmt und für die erfassten Daten (145) angewendet wird; und
- Anpassen der Energieflüsse (105) innerhalb des Gesamtsystems (110) basierend auf der ausgegebenen Anzahl von auszuführenden Anpassungen (170) der Energieflüsse (105).

12. Verfahren (400) gemäß Anspruch 11, weiterhin aufweisend
- Spiegeln von Signalschnittstellen von externen Energiequellen (320) und/oder externen Energieverbrauchern des Gesamtsystems (110) für die Bestimmung der auszuführenden Anpassungen (170).

13. Verfahren (400) gemäß Anspruch 11 oder 12, weiterhin aufweisend:
- Eingabe der vorbestimmten Regelstrategie (162) über eine Nutzerschnittstelle (146).

14. Computerprogramm mit einem Programmcode zur Durchführung eines Verfahrens (400) gemäß Anspruch 11, wenn der Programmcode auf einem Computer, einem Prozessor oder einer programmierbaren Hardwarekomponente ausgeführt wird.
